# EUROPÄISCHE PATENTSCHRIFT

(11) **EP 2 593 510 B1**
(45) Veröffentlichungstag und Bekanntmachung des Hinweises auf die Patenterteilung: **21.12.2016**
(21) Anmeldenummer: 11730930.2
(22) Anmeldetag: 27.06.2011
(51) Int. Cl.: C08L 25/12, C08L 55/02, C08K 5/3415, C08K 5/3435, C08K 5/3492

(54) **STABILISIERTE ACRYLNITRIL/STYROL/BUTADIEN FORMMASSEN**
STABILIZED ACRYLONITRILE/STYRENE/BUTADIENE MOLDING COMPOSITIONS
MATIÈRES À MOULER D'ACRYLONITRILE/STYRÈNE/BUTADIÈNE STABILISÉES

(30) Priorität: 18.01.2011 EP 11151249; 12.07.2010 EP 10169245; 12.07.2010 EP 10169243; 12.07.2010 EP 10169250; 12.07.2010 EP 10169257
(43) Veröffentlichungstag der Anmeldung: 22.05.2013
(73) Patentinhaber: INEOS Styrolution Europe GmbH, 60325 Frankfurt am Main (DE)
(72) Erfinder: MINKWITZ, Rolf, 68167 Mannheim (DE)
(74) Vertreter: Jacobi, Markus Alexander
(86) Internationale Anmeldenummer: PCT/EP2011/060725
(87) Internationale Veröffentlichungsnummer: WO 2012/007269

(56) Entgegenhaltungen:
- WO-A1-2008/031719
- DE-A1- 10 316 198
- US-A- 4 957 953
- DATABASE WPI Week 201037 Thomson Scientific, London, GB; AN 2010-F96426 XP002661790, -& CN 101 709 133 A (SUZHOU XUGUANG POLYMER CO LTD) 19. Mai 2010 (2010-05-19)
- DATABASE WPI Week 200508 Thomson Scientific, London, GB; AN 2005-068390 XP002661791, -& JP 2004 346237 A (UMG ABS KK) 9. Dezember 2004 (2004-12-09)

## Beschreibung

Die vorliegende Erfindung betrifft thermoplastische Formmassen enthaltend Styrolcopolymere und schlagzäh-modifizierender Propfkautschuke mit olefinischer Doppelbindung in der Kautschukphase.

Stabilisierte thermoplastische Formmassen unterschiedlichster Art sind bekannt und aufgrund ihres für viele Anwendungen günstigen Eigenschaftsprofils, insbesondere ihrer guten Schlagzähigkeit, breit einsetzbar.

Aus der US-A-4,692,486 sind Stabilisatormischungen enthaltend Verbindungen der Formeln (I) und (III) der vorliegenden Anmeldung für Polypropylen, Polyurethan und Polystyrol bekannt, wobei die eingesetzten Mengen der einzelnen Stabilisatorkomponenten kleiner oder gleich 0,1 Gew.-% ist.

Die DE-A-103 16 198 offenbart Stabilisatorgemische für die unterschiedlichsten Arten von thermoplastischen Polymeren, exemplarisch hervorgehoben wird Polypropylen. Bei den Stabilisatorgemischen handelt es sich um Dreistoffgemische. Für die drei Komponenten dieses Stabilisatorgemischs werden jeweils eine Vielzahl möglicher generischer und spezieller Verbindungen beschrieben. Als lediglich eine von vielen Möglichkeiten werden auch Stabilisatorgemische beschrieben, die auch Verbindungen der Formeln (VI), (VII) und (VIII) der vorliegenden Anmeldung enthalten. Jede der drei Stabilisatorkomponenten kann dabei bevorzugt in Mengen von 0,05 bis 1 Gew.-%, bezogen auf das organische Material, vorliegen. Nachteilig an dieser Ausführungsform ist die starke Abnahme der mult-axialen Zähigkeit während der Bewitterung.

US 4 957 953 A offenbart ABS-Zusammensetzungen (Beispiel 4-1), die weder eine Komponente C (Stabilisator VI) noch eine Komponente D (Stabilisator VII) enthalten.

Der vorliegenden Erfindung lag daher die Aufgabe zugrunde, verbesserte Formmassen auf der Basis von Acrylnitril/Butadien/Styrol Formmassen bereitzustellen.

Demgemäß wurden neue und verbesserte Thermoplastische Formmasse, enthaltend:
a) 3 bis 94,6 Gew.-% eines oder mehrerer Styrolcopolymere als Komponente A
b) 5 bis 95,2 Gew.-% eines oder mehrerer schlagzäh-modifizierender Propfkautschuke mit olefinischer Doppelbindung in der Kautschukphase als Komponente B
c) 0,2 bis 0,9 Gew.-% einer Verbindung der Formel (I) als Komponente C: 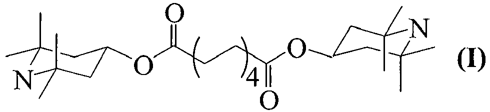
d) 0,2 bis 0,7 Gew.-% einem Gemisch der Formel (II) als Komponente D: 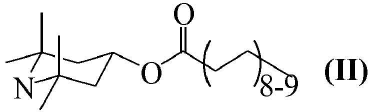
e) 0 bis 0,5 Gew.-% einer Verbindung der Formel (III) als Komponente E: 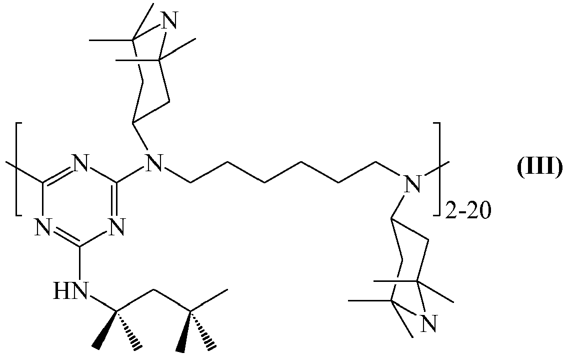 oder 0 bis 0,5 Gew.-% einer Verbindung der Formel (IV): 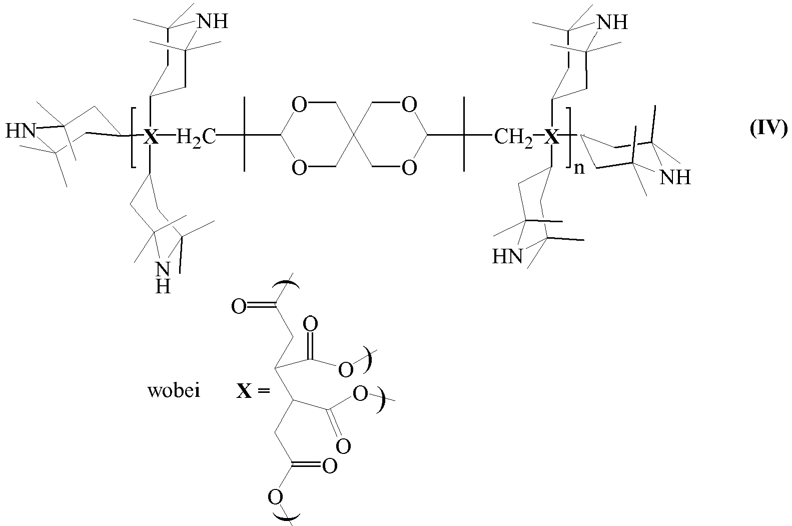 oder 0 bis 0,5 Gew.-% einer Verbindung der Formel (V): 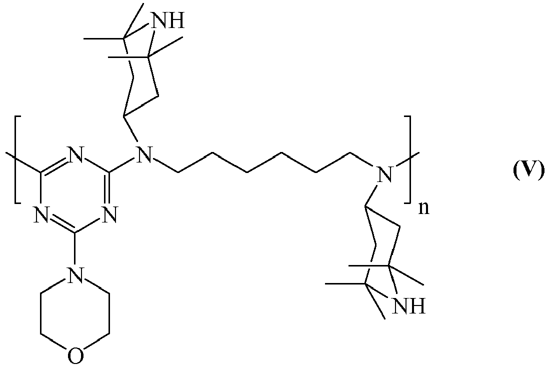 oder 0 bis 0,5 Gew.-% einer Verbindung der Formel (VI): 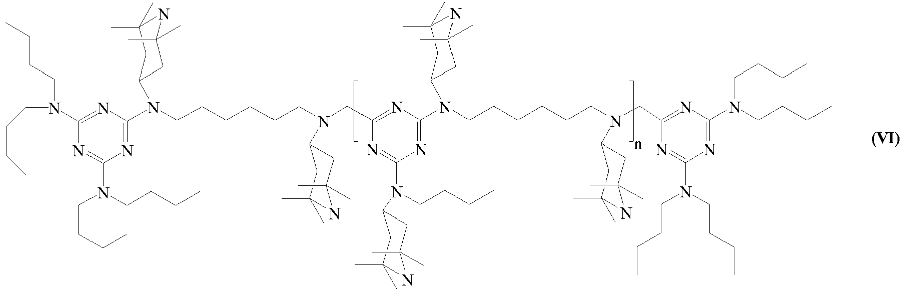
f) 0 bis 10 Gew.-% eines oder mehrerer Zusatzstoffe, die von den Komponenten C,D und E verschieden sind, als Komponente F, und
g) 0 bis 40 Gew.-% faser- oder teilchenförmiger Füllstoffe als Komponente G, wobei die Gew.-% jeweils auf das Gesamtgewicht der Komponenten A bis G bezogen sind und zusammen 100 Gew.-% ergeben, gefunden.

Weiterhin wurden Verfahren zur Herstellung dieser Formmassen, deren Verwendung zur Herstellung von Folien, Formkörpern oder Fasern sowie diese Folien, Formkörper oder Fasern erfunden.

Durch die erfindungswesentliche spezielle Auswahl jeder einzelnen Komponente und ihrer speziellen Mengenanteile weisen die erfindungsgemäßen Formmassen gegenüber den bekannten stabilisierten Formmassen eine nochmals verbesserte Witterungsbeständigkeit, d.h. eine nochmals verbesserte Wärme-, Licht- und/oder Sauerstoffbeständigkeit, auf.

Die erfindungsgemäßen Gegenstände, Verfahren und Verwendungen werden im Folgenden beschrieben.

Die erfindungsgemäßen Formmassen enthalten, bezogen auf das Gesamtgewicht der Komponenten A, B, C, D, E, F und G welches insgesamt 100 Gew.-% ergibt,
a) 3 bis 94,6 Gew.-%, bevorzugt 10 bis 75 Gew.-%, besonders bevorzugt 20 bis 70 Gew.-% der Komponente A,
b) 5 bis 95,2 Gew.-%, bevorzugt 10 bis 50 Gew.-%, besonders bevorzugt 15 bis 40 Gew.-% der Komponente B,
c) 0,2 bis 0,9 Gew.-%, bevorzugt 0,2 bis 0,7 Gew.-%, besonders bevorzugt 0,3 bis 0,6 Gew.-% der Komponente C,
d) 0,2 bis 0,7 Gew.-%, bevorzugt 0,2 bis 0,4 Gew.-% der Komponente D,
e) 0 bis 0,5 Gew.-%, bevorzugt 0,1 bis 0.5 Gew.-%, besonders bevorzugt 0,2 bis 0,4 Gew.-% der Komponente E
f) 0 bis 10 Gew.-%, bevorzugt 0 bis 8 Gew.-%, besonders bevorzugt 0 bis 5 Gew.-% der Komponente F, und
g) 0 bis 40 Gew.-%, bevorzugt 0 bis 25 Gew.-%, besonders bevorzugt 0 bis 15 Gew.-% der Komponente G.

Das Gewichtsverhältnis Komponente C zu Komponente D liegt in der Regel im Bereich von 4:1 bis 0,25:1, bevorzugt 4:1 bis 1:1, besonders bevorzugt 3:1 bis 1:1.

Das Gewichtsverhältnis Komponente D zu E liegt in der Regel im Bereich von 2:1 bis 0,5:1.

### Komponente A:

Als Komponente A enthalten die erfindungsgemäßen thermoplastischen Formmassen ein oder mehrere Styrolcopolymere. Dabei können in den Copolymeren neben Styrol beliebige geeignete Comonomere vorliegen. Bevorzugt handelt es sich um ein Styrol-Acrylnitril-Copolymer, alpha-Methylstyrol-Acrylnitril-Copolymer oder N-Phenylmaleinimid-Acrylnitril-Copolymer.

Als Komponente A sind grundsätzlich alle dem Fachmann bekannten und in der Literatur beschriebenen Styrol-Acrylnitril-Copolymere, α-Methylstyrol-Acrylnitril-Copolymere, N-Phenylmaleinimid-Acrylnitril-Copolymer oder deren Mischungen einsetzbar, sofern deren Mischungen eine Viskositätszahl VZ (gemessen nach DIN 53727 bei 25 °C als 0,5 gew.-%ige Lösung in Dimethylformamid; diese Messmethode gilt auch für alle im folgenden genannten Viskositätszahlen VZ) gleich oder kleiner als 85 ml/g haben.

Bevorzugte Komponenten A sind aufgebaut aus 50 bis 90 Gew.-%, bevorzugt 60 bis 80 Gew.-%, insbesondere 65 bis 78 Gew.-%, Styrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Weiterhin bevorzugte Komponenten A sind aufgebaut aus 50 bis 90 Gew.-%, bevorzugt 60 bis 80 Gew.%, insbesondere 65 bis 78 Gew.-%, α-Methylstyrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind aufgebaut aus 50 bis 90 Gew.-%, bevorzugt 60 bis 80 Gew.%, insbesondere 65 bis 78 Gew.-%, N-Phenylmaleinimid und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere, α-Methylstyrol-Acrylnitril-Copolymere und N-Phenylmaleinimid-Acrylnitril-Copolymere.

Als oben genannte weitere Monomere sind alle copolymerisierbaren Monomere einsetzbar wie beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymere der Komponente A lassen sich nach bekannten Methoden herstellen. Sie lassen sich z. B. durch radikalische Polymerisation, insbesondere durch Emulsions-, Suspensions-, Lösungs- oder Massepolymerisation herstellen.

### Komponente B:

Die Komponente B besteht bevorzugt aus einen oder mehreren schlagzäh-modifizierenden Propfkautschuken mit olefinischer Doppelbindung in der Kautschukphase. Die Komponente B ist ein Pfropfcopolymerisat mit bimodaler Teilchengrößenverteilung und ist in den erfindungsgemäßen Formmassen mit einem Anteil von 5 bis 80, bevorzugt 10 bis 70 und besonders bevorzugt 15 bis 60 Gew.-% enthalten, bezogen auf die Summe der Komponenten A, B, C, D und/oder E, sowie falls vorhanden F und G. Das Pfropfpolymerisat B ist aufgebaut aus einer "weichen" kautschukelastischen, teilchenförmigen Pfropfgrundlage b1, und einer "harten" Pfropfauflage b2. Die Komponente B hat in der Regel einen Quellungsindex von 5 bis 20, bevorzugt von 6 bis 15 und besonders bevorzugt von 7 bis 13.

Die Pfropfgrundlage b1 ist mit einem Anteil von 40 bis 90, bevorzugt 45 bis 85 und besonders bevorzugt 50 bis 80 Gew.-%, bezogen auf die Komponente B, enthalten. Man erhält die Pfropfgrundlage b1 durch Polymerisation von, bezogen auf b1, 70 bis 100, bevorzugt 75 bis 100 und besonders bevorzugt 80 bis 100 Gew.-% mindestens eines konjugierten Diens b11, und 0 bis 30, bevorzugt 0 bis 25 und besonders bevorzugt 0 bis 10 Gew.-% mindestens eines weiteren monoethylenisch ungesättigten Monomeren. Als konjugierte Diene b11 kommen Butadien, I-sopren, Chloropren oder deren Mischungen in Betracht. Bevorzugt verwendet man Butadien oder Isopren oder deren Mischungen, ganz besonders Butadien.

Der Bestandteil b1 der Formmassen kann außerdem auf Kosten der Monomeren b11 weitere Monomere b12 enthalten, welche die mechanischen und thermischen Eigenschaften des Kerns in einem gewissen Bereich variieren. Als Beispiele für solche monoethylenisch ungesättigten Comonomere seien genannt: Styrol, alpha-Methylstyrol, Acrylnitril, Maleinsäureanhydrid, Acrylsäure, Methylacrylsäure, Maleinsäure oder Fumarsäure.

Bevorzugt werden Styrol, α-Methylstyrol, n-Butylacrylat oder deren Mischungen als Monomere b12 verwendet, besonders bevorzugt Styrol und n-Butylacrylat oder deren Mischungen und ganz besonders bevorzugt Styrol. Styrol oder n-Butylacrylat oder deren Mischungen verwendet man insbesondere in Mengen von zusammengenommen bis zu 20 Gew.-%, bezogen auf b1.

In einer besonderen Ausführungsform verwendet man eine Pfropfgrundlage aus, bezogen auf b1:
b11 70 bis 99,9, bevorzugt 90 bis 99 Gew.-% Butadien, und
b12 0,1 bis 30, bevorzugt 1 bis 10 Gew.-% Styrol.

Die Pfropfauflage b2 ist mit einem Anteil von 10 bis 60, bevorzugt 15 bis 55 und besonders bevorzugt 20 bis 50 Gew.-%, bezogen auf die Komponente B enthalten.

Man erhält die Pfropfauflage b2 durch Polymerisation von, bezogen auf b2:
b21 65 bis 95, bevorzugt 70 bis 90 und besonders bevorzugt 72 bis 85 Gew.-% mindestens eines vinylaromatischen Monomeren,
b22 5 bis 35, bevorzugt 10 bis 30 und besonders bevorzugt 15 bis 28 Gew.-% Acrylnitril,
b23 0 bis 30, bevorzugt 0 bis 20 und besonders bevorzugt 0 bis 15 Gew.-% mindestens eines weiteren monoethylenisch ungesättigten Monomeren.

Als vinylaromatische Monomere kann Styrol und/oder alpha-Methylstyrol verwenden. Als weitere Monomere b23 kommen die weiter oben für die Komponente b12 genannten Monomere in Betracht. Insbesondere Methylmethacrylat und Acrylate wie n-Butylacrylat sind geeignet. Ganz besonders geeignet als Monomeres b23 ist Methylmethacrylat MMA, wobei eine Menge von bis zu 20 Gew.-% MMA, bezogen auf b2, bevorzugt ist.

Die Pfropfpolymerisate werden nach dem Verfahren der Emulsionspolymerisation hergestellt. Üblicherweise polymerisiert man bei 20 bis 100, bevorzugt 30 bis 90°. In der Regel werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze, insbesondere die Na- und K-Salze, von Alkylsulfonaten oder Fettsäuren mit 10 bis 18 Kohlenstoffatomen.

In der Regel werden die Emulgatoren in Mengen von 0,5 bis 5 Gew.-%, insbesondere von 0,5 bis 3 Gew.-%, bezogen auf die bei der Herstellung der Pfropfgrundlage b1 eingesetzten Monomeren, eingesetzt.

Vorzugsweise verwendet man zur Herstellung der Dispersion soviel Wasser, daß die fertige Dispersion einen Feststoffgehalt von 20 bis 50 Gew.-% hat. Üblicherweise wird bei einem Wasser/Monomeren-Verhältnis von 2:1 bis 0,7:1 gearbeitet.

Zum Starten der Polymerisationreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden.

In der Regel werden die Polymerisationsinitiatoren in einer Menge von 0,1 bis 1 Gew.-%, bezogen auf die Pfropfgrundlage-Monomeren b11 und b12, eingesetzt.

Die Radikalbildner und auch die Emulgatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z.B. auf- oder absteigend, linear oder exponentiell, oder auch stufenweise (Treppenfunktion) sein kann.

Ferner kann man Molekulargewichtsregler wie z.B. Ethylhexylthioglycolat, n- oder t-Dodecylmercaptan oder andere Mercaptane, Terpinole und dimeres a-Methylstyrol oder andere, zur Regelung des Molekulargewichts geeigneten Verbindungen, mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Zur Einhaltung eines konstant bleibenden pH-Wertes, der vorzugsweise bei 6 bis 9 liegt, kann man Puffersubstanzen wie Na2HPO4/NaH2PO4, Natriumhydrogencarbonat oder Puffer auf Basis Citronensäure/Citrat, mitverwenden. Regler und Puffersubstanzen werden in den üblichen Mengen eingesetzt, so daß sich nähere Angaben hierzu erübrigen.

In einer besonderen bevorzugten Ausführungsform fügt man während der Pfropfung der Pfropfgrundlage b1 mit den Monomeren b21 bis b23 ein Reduktionsmittel zu.

Man kann die Pfropfgrundlage in einer besonderen Ausführungsform auch durch Polymerisation der Monomeren b1 in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saatlatices bestehen beispielsweise aus Polybutadien oder Polystyrol.

In einer anderen bevorzugten Ausführungsform kann man die Pfropfgrundlage b1 im sogenannten Zulaufverfahren herstellen. Bei diesem Verfahren wird ein bestimmter Anteil der Monomeren b1 vorgelegt und die Polymerisation gestartet, wonach man den Rest der Monomeren ("Zulaufanteil") a1) als Zulauf während der Polymerisation zufügt. Die Zulaufparameter (Gestalt des Gradienten, Menge, Dauer, etc.) hängen von den anderen Polymerisationsbedingungen ab. Sinngemäß gelten auch hier die zur Zugabeweise des Radikalstartes bzw. Emulgators gemachten Ausführungen. Bevorzugt beträgt beim Zulaufverfahren der vorgelegte Anteil der Monomeren b1 5 bis 50, besonders bevorzugt 8 bis 40 Gew.-%, bezogen auf b1. Bevorzugt läßt man den Zulaufanteil von a1) innerhalb 1 - 18 Stunden, insbesondere 2 - 16 Stunden, ganz besonders 4 bis 12 Stunden, zulaufen.

Weiterhin eigenen sich auch Pfropfpolymerisate mit mehreren "weichen" und "harten" Schalen, z.B. des Aufbaus b1-b2-b1-b2, oder b2-b1-b2, vor allem im Falle größerer Teilchen.

Die genauen Polymerisationsbedingungen, insbesondere Art, Menge und Dosierung des Emulgators und der anderen Polymerisationshilfsstoffe werden bevorzugt so gewählt, daß der erhaltene Latex des Pfropfpolymerisates B, eine mittlere Teilchengröße, definiert durch den d50-Wert der Teilchengrößenverteilung, von 80 bis 800, bevorzugt 80 bis 600 und besonders bevorzugt 85 bis 400 aufweist gemessen mit Hilfe der HDC (W. Wohlleben and H. Schuch in Measurement of Particle Size Distribution of Polymer Latexes, 2010, Editors: Luis M. Gugliotta and Jorge R. Vega, p. 130 - 153).

Man stimmt die Reaktionsbedingungen so aufeinander ab, daß die Polymerisat-Teilchen von B eine bimodale Teilchengrößenverteilung aufweisen, also eine Größenverteilung mit zwei mehr oder weniger ausgeprägten Maxima. Das erste Maximum ist deutlicher ausgeprägt (vergleichsweise schmaler Peak) als das zweite und liegt in der Regel bei 25 bis 200, bevorzugt 60 bis 170 besonders bevorzugt 70 bis 150 nm. Das zweite Maximum liegt in der Regel bei 150 bis 800, bevorzugt 180 bis 700, besonders bevorzugt 200 bis 600 nm. Dabei liegt das zweite Maximum (150 bis 800 nm) bei größeren Teilchengrößen als das erste Maximum (25 bis 200 nm).

Bevorzugt wird die bimodale Teilchengrößenverteilung durch eine (teilweise) Agglomeration der Polymerteilchen erzielt. Dazu kann beispielsweise wie folgt vorgegangen werden: Man polymerisiert die Monomeren b1, welche den Kern aufbauen, bis zu einem Umsatz von üblicherweise mindestens 90, bevorzugt größer 95 %, bezogen auf die eingesetzten Monomeren. Dieser Umsatz ist in der Regel nach 4 bis 20 Stunden erreicht. Der erhaltene Kautschuklatex hat eine mittlere Teilchengröße d50 von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymerisates. Vorzugsweise werden Dispersionen von Copolymerisaten von (C1-C4-Alkyl)estern der Acrylsäure, vorzugsweise von Ethylacrylat, mit 0,1 bis 10 Gew.-% polare Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Bevorzugt ist ein Zusammensetzung aus 80-98 % Ethylacrylat und 2-20 % Methacrylamid, besonders bevorzugt ist eine Zusammensetzung aus 90-98 % Ethylacrylat und 2-10 % Methacrylamid. Die Agglomerierdispersion kann gegebenenfalls auch mehrere der genannten Acrylesterpolymerisate enthalten.

Die Konzentration der Acrylesterpolymerisate in der zur Agglomeration verwendeten Dispersion soll im allgemeinen zwischen 3 und 40 Gew.-% liegen. Bei der Agglomeration werden 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.

Außer mittels einer Acrylesterpolymerisat-Dispersion kann der Kautschuklatex auch durch andere Agglomeriermittel wie z.B. Essigsäureanhydrid, agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so daß eine bimodale Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Der erhaltene teilagglomerierte Kautschuklatex ist verhältnismäßig stabil, so daß er ohne weiteres gelagert und transportiert werden kann, ohne daß Koagulation eintritt.

Um eine bimodale Teilchengrößenverteilung des Pfropfpolymerisates B zu erzielen, ist es auch möglich, zwei verschiedene Pfropfpolymerisate B' und B", die sich in ihrer mittleren Teilchengröße unterscheiden, getrennt voneinander in üblicher Weise herzustellen und die Pfropfpolymerisate B' und B" im gewünschten Mengenverhältnis zusammenzugeben.

Üblicherweise wird die Polymerisation der Pfropfgrundlage b1 durch Wahl der Reaktionsbedingungen so geführt, daß eine Pfropfgrundlage mit einem bestimmten Vernetzungszustand resultiert.

Als hierfür wesentliche Parameter sind beispielhaft anzuführen die Reaktionstemperatur und - dauer, das Verhältnis von Monomeren, Regler, Radikalstarter und beispielsweise beim Zulaufverfahren, die Zulaufgeschwindigkeit und die Menge und der Zugabezeitpunkt von Regler und Initiator.

Eine Methode zur Charakterisierung des Vernetzungszustandes von vernetzten Polymerteilchen ist die Messung des Quellungsindex Ql, der ein Maß für die Quellbarkeit eines mehr oder weniger stark vernetzten Polymeren durch ein Lösemittel ist. Übliche Quellungsmittel sind beispielsweise Methyletylketon oder Toluol. Üblicherweise liegt der QI der ungeproften erfindungsgemäßen Formmassen b1 im Bereich QI = 10 bis 60, bevorzugt bei 15 bis 55 und besonders bevorzugt bei 20 bis 50 in Toluol.

Eine andere Methode zur Charakterisierung des Vernetzungszustandes ist die Messung von NMR-Relaxationszeiten der beweglichen Protonen, die sog. T2-Zeiten. Je stärker vernetzt ein bestimmtes Netzwerk ist, desto niedriger liegen seine T2-Zeiten. Übliche T2-Zeiten für die erfindungsgemäßen Pfropfgrundlagen b1 sind mittlere T2-Zeiten im Bereich 2,0 bis 4,5 ms, bevorzugt 2,5 bis 4,0 ms und besonders bevorzugt 2,5 bis 3,8 ms, gemessen an verfilmten Proben bei 80°C.

Ein weiteres Maß für die Charakterisierung der Pfropfgrundlage und deren Vernetzungszustand ist der Gelgehalt, d.h. derjenige Produktanteil, der vernetzt und damit in einem bestimmten Lösemittel nicht löslich ist. Sinnvollerweise wird der Gelgehalt im gleichen Lösemittel wie der Quellungsindex bestimmt. Übliche Gelgehalte der erfindungsgemäßen Pfropfgrundlagen b1 liegen im Bereich 50 bis 90 %, bevorzugt 55 bis 85 % und besonders bevorzugt 60 bis 80 %.

Die Bestimmung des Quellungsindex geschieht beispielsweise nach folgendem Verfahren: ca. 0,2 g des Feststoffes einer durch Verdampfen des Wassers verfilmten Pfropfgrundlagendispersion werden in einer genügend großen Menge (z.B. 50 g) Toluol angequollen. Nach z.B. 24 h wird das Toluol abgesaugt und die Probe ausgewogen. Nach Trocknen der Probe im Vakuum wird erneut ausgewogen. Der Quellungsindex ist das Verhältnis der Auswaage nach dem Quellungsvorgang zu der Auswaage trocken nach der erneuten Trocknung. Dementsprechend errechnet sich der Gelanteil aus dem Verhältnis der Trokenauswaage nach dem Quellschritt zur Einwaage vor dem Quellschritt (x 100 %)

Die Bestimmung der T2-Zeit geschiegt durch Messen der NMR-Relaxation einer entwässerten und verfilmten Probe der Pfropfgrundlagendispersion. Hierzu wird beispielsweise die Probe nach Ablüften über Nacht bei z,B. 60°C 3 h im Vakuum getrocknet und dann mit einem geeigneten Meßgerät, z.B. minispec-Gerät der Fa. Bruker, bei 80°C vermessen. Vergleichbar sind nur Proben, die nach der gleichen Methode vermessen wurden, da die Relaxation deutlich temperaturabhängig ist.

Die Herstellung der Pfropfauflage b2 kann unter den gleichen Bedingungen wie die Herstellung der Pfropfgrundlage b1 erfolgen, wobei man die Auflage b2 in einem oder mehreren Verfahrensschritten herstellen kann. Beispielsweise kann man bei einer zweistufigen Pfropfung zunächst Styrol bzw. a-Methylstyrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform. Weitere Einzelheiten zur Herstellung der Pfropfpolymerisate B sind in den DE-OS 12 60 135 und 31 49 358 beschrieben.

Es ist vorteilhaft, die Pfropfpolymerisation auf die Pfropfgrundlage b1 wiederum in wäßriger Emulsion durchzuführen. Sie kann im gleichen System wie die Polymerisation der Pfropfgrundlage vorgenommen werden, wobei weiter Emulgator und Initiator zugegeben werden kann. Diese müssen mit den zur Herstellung der Pfropfgrundlage a1) verwendeten Emulgatoren bzw. Initiatoren nicht identisch sein. So kann z.B. zweckmäßig sein, als Initiator für die Herstellung der Pfropfgrundlage b1 ein Persulfat zu verwenden, zur Polymerisation der Pfropfhülle b2 jedoch ein Redoxinitiatorsystem einzusetzen. Im übrigen gilt für die Wahl von Emulgator, Initiator und Polymerisationshilfsstoffen das bei der Herstellung der Pfropfgrundlage b1 gesagte. Das aufzupfropfende Monomerengemisch kann dem Reaktionsgemisch auf einmal, absatzweise in mehreren Stufen oder vorzugsweise kontinuierlich während der Polymerisation zugegeben werden.

Soweit bei der Pfropfung der Pfropfgrundlage b1 nicht gepfropfte Polymere aus den Monomeren b2 entstehen, werden die Mengen, die in der Regel unter 10 Gew.-% von b2 liegen, der Masse der Komponente B zugeordnet.

Die erfindungsgemäßen Pfropfcopolymerisate B können so weiterverwendet werden, wie sie in der Reaktionsmischung anfallen, beispielsweise als Latexemulsion oder -dispersion. Alternativ und wie es für die meisten Anwendungen bevorzugt ist, können sie aber auch in einem weiteren Schritt aufgearbeitet werden. Maßnahmen zur Aufarbeitung sind dem Fachmann bekannt. Dazu zählt z.B., dass die Pfropfcopolymerisate B aus der Reaktionsmischung isoliert werden, z.B. durch Sprühtrocknung, Scherung oder durch Fällen mit starken Säuren oder mittels Nukelierungsmitteln wie anorganischen Verbindungen z.B. Magnesiumsulfat. Die in der Reaktionsmischung vorliegenden Pfropfcopolymerisate B können aber auch dadurch aufgearbeitet werden, dass sie ganz oder teilweise entwässert werden. Ebenso ist es möglich, die Aufarbeitung mittels einer Kombination der genannten Maßnahmen vorzunehmen.

Üblicherweise liegt der OI der Propfpolymerisate im Bereich OI = 5 bis 20, bevorzugt bei 6 bis 15 und besonders bevorzugt bei 7 bis 13

Das Mischen der Komponenten A und B zur Herstellung der Formmasse kann nach jeder beliebigen Weise nach allen bekannten Methoden erfolgen. Wenn diese Komponenten beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen dieser Komponenten durch gemeinsames Extrudieren, Kneten oder Verwalzen der Komponenten, wobei die Komponenten, sofern erforderlich, zuvor aus der bei der Polymerisation erhaltenen Lösung oder wässrigen Dispersion isoliert worden sind. Die in wässriger Dispersion erhaltenen Produkte B der Pfropfcopolymerisation können auch nur teilweise entwässert werden und als feuchte Krümel mit der Hartmatrix A vermischt werden, wobei dann während des Vermischens die vollständige Trocknung der Pfropfcopolymerisate B erfolgt.

### Komponente C:

Als Komponente C der erfindungsgemäßen Formmassen wird eine Verbindung der Formel (I) eingesetzt:

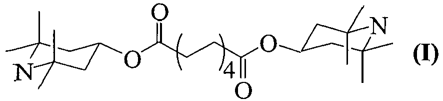

Dieses sterisch gehinderte Amin (CAS Nummer 52829-07-9) und seine Herstellung sind dem Fachmann bekannt und in der Literatur beschrieben (s. beispielsweise US-A-4 396 769 und den darin zitierten Literaturstellen). Vertrieben wird es von BASF SE unter der Bezeichnung Tinuvin^{®} 770.

### Komponente D:

Als Komponente D der erfindungsgemäßen Formmassen wird eine Verbindung der Formel (II) eingesetzt:

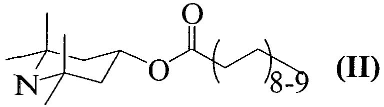

Dieses sterisch gehinderte Amin (CAS Nummer 167078-06-0) und seine Herstellung sind dem Fachmann bekannt und in der Literatur beschrieben (Carlsson et al., Can. Journal of Polymer Science, Polymer Chemistry Edition (1982), 20(2), 575-82). Vertrieben wird es von Cytec Industries unter der Bezeichnung Cyasorb^{®} 3853.

### Komponente E:

Als Komponente E der erfindungsgemäßen Formmassen kann eine Verbindung der Formel (III) eingesetzt werden:

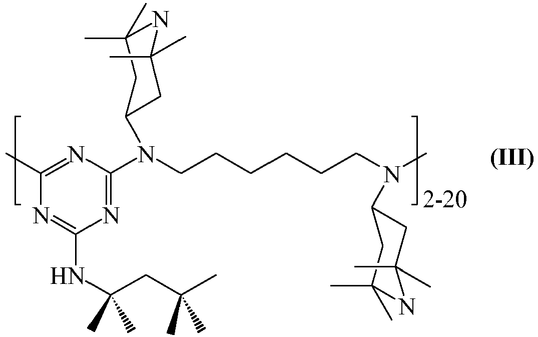

Dieses sterisch gehinderte Amin (CAS Nummer 71878-19-8) und seine Herstellung sind dem Fachmann bekannt und in der Literatur beschrieben (s. beispielsweise EP-A-93 693 und den darin zitierten Literaturstellen). Vertrieben wird es von BASF SE unter der Bezeichnung Chimassorb^{®} 944.

Als weitere Komponente E der erfindungsgemäßen Formmassen kann eine Verbindung der Formel (IV) eingesetzt werden:

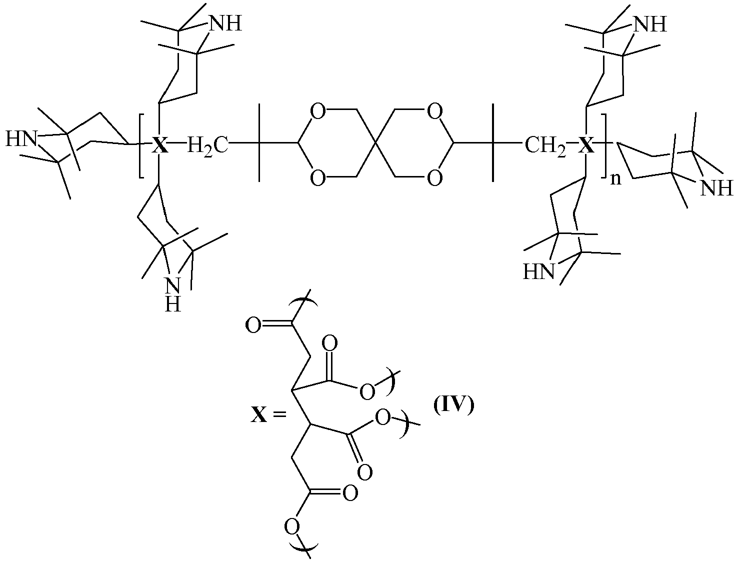

Dieses sterisch gehinderte Amin (CAS Nummer 101357-37-3) und seine Herstellung sind dem Fachmann bekannt und in der Literatur beschrieben (s. beispielsweise US-A-5 208 132 und den darin zitierten Literaturstellen). Vertrieben wird es von ADEKA unter der Bezeichnung Adeka Stab^{®} LA-68.

Als weitere Komponente E der erfindungsgemäßen Formmassen kann eine Verbindung der Formel (V) eingesetzt werden:

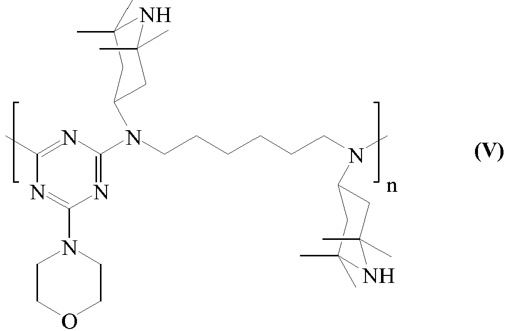

Dieses sterisch gehinderte Amin (CAS Nummer 82451-48-7) und seine Herstellung sind dem Fachmann bekannt und in der Literatur beschrieben (s. beispielsweise US-A-4 331 586 und den darin zitierten Literaturstellen). Vertrieben wird es von der Cytec Industries unter der Bezeichnung Cyasorb^{®} UV-3346.

Als weitere Komponente E der erfindungsgemäßen Formmassen kann eine Verbindung der Formel (VI) eingesetzt werden:

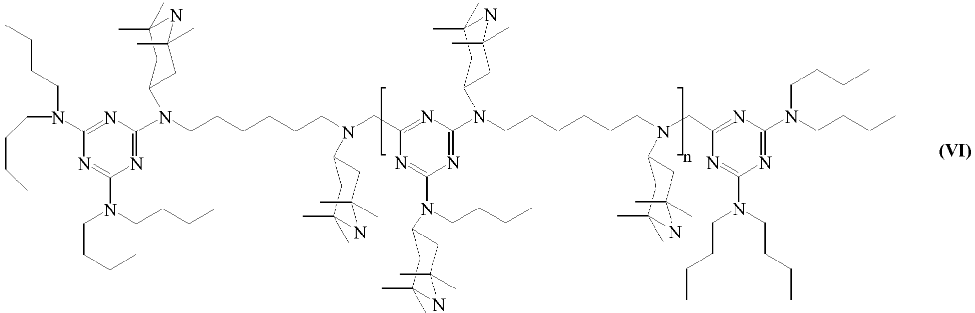

Dieses sterisch gehinderte Amin (CAS Nummer 192268-64-7) und seine Herstellung sind dem Fachmann bekannt und in der Literatur beschrieben (s. beispielsweise EP-A-782 994 und den darin zitierten Literaturstellen). Vertrieben wird es von BASF. unter der Bezeichnung Chimassorb^{®} 2020.

### Komponente F:

Neben den Komponenten A, B, C, D und E können die erfindungsgemäßen Formmassen einen oder mehrere, von den Komponenten C, D und E verschiedene Zusatzstoffe bzw. Additive, die für Kunststoffmischungen typisch und gebräuchlich sind, enthalten.

Als solche Zusatzstoffe bzw. Additive seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, lodide), die sich von Metallen der Gruppe I des Periodensystems der Elemente ableiten (wie Li, Na, K, Cu).

Als Komponente E geeignete Stabilisatoren sind die üblichen gehinderten Phenole, aber auch "Vitamin E" bzw. analog aufgebaute Verbindungen. Auch Benzophenone, Resorcine, Salicylate, Benzotriazole und andere Verbindungen sind geeignet. Diese werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen -sofern vorhanden - im Bereich von 0,05 bis 1 Gew.-% (bezogen auf das Gesamtgewicht der erfindungsgemäßen Formmassen).

Auch Siliconöle, oligomeres Isobutylen oder ähnliche Stoffe kommen als Zusatzstoffe in Frage, die üblichen Mengen betragen - sofern vorhanden - 0,05 bis 5 Gew.-% (bezogen auf das Gesamtgewicht der erfindungsgemäßen Formmassen). Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren, Schmiermittel und Antistatika werden üblicherweise in Mengen von 0 bis 4 Gew.-%, bevorzugt 0,01 bis 4 Gew.-% (bezogen auf das Gesamtgewicht der erfindungsgemäßen Formmassen) verwendet.

### Komponente G:

Als Komponente G enthalten die erfindungsgemäßen Formmassen von den Komponenten C, D, E und F verschiedene faser- oder teilchenförmige Füllstoffe oder deren Mischungen. Dabei handelt es sich vorzugsweise um kommerziell erhältliche Produkte, beispielsweise Kohlenstofffasern und Glasfasern. Verwendbare Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern als auch Schnittglasfasern (staple) oder Rovings mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Neben den Komponenten A, B, C, D und ggf. E und F können die erfindungsgemäßen Formmassen weitere Polymere enthalten.

Die Herstellung der erfindungsgemäßen Formmassen aus den Komponenten kann nach jeder beliebigen Weise nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten, z. B. bei Temperaturen im Bereich von 160 bis 400°C, bevorzugt von 180 bis 280°C, wobei die Komponenten, in einer bevorzugten Ausführungsform, zuvor aus den bei den jeweiligen Herstellschritten erhaltenen Reaktionsmischungen teilweise oder vollständig isoliert worden sind. Beispielsweise können die Pfropfcopolymerisate B als feuchte Krümel mit einem Granulat des vinylaromatischen Copolymers A vermischt werden, wobei dann während des Vermischens die vollständige Trocknung zu den beschriebenen Pfropfcopolymerisaten erfolgt. Die Komponenten können in jeweils reiner Form geeigneten Mischvorrichtungen, insbesondere Extrudern, bevorzugt Doppelschneckenextrudern, zugeführt werden. Es können aber auch einzelne Komponenten, beispielsweise A und B, zuerst vorgemischt und anschließend mit weiteren Komponenten A oder B oder anderen Komponenten, beispielsweise C und D, vermischt werden. Die Komponente A kann dabei als vorab separat hergestellte Komponente eingesetzt werden; es ist aber auch möglich, den Acrylatkautschuk und das vinylaromatische Copolymer unabhängig voneinander zu dosieren. In einer Ausführungsform wird zuerst ein Konzentrat, beispielsweise der Komponenten B und C in der Komponente A hergestellt (sogenannte Additiv-Batches oder Masterbatches) und anschließend mit den gewünschten Mengen der restlichen Komponenten vermischt. Die Formmassen können nach dem Fachmann bekannten Verfahren beispielsweise zu Granulaten, oder aber auch direkt zu beispielsweise Formkörpern verarbeitet werden.

Die erfindungsgemäßen Formmassen können zu Folien, Formkörpern oder Fasern verarbeitet werden. Diese Folien, Formkörpern oder Fasern sind insbesondere für den Einsatz im Außenbereich, d.h. unter Witterungseinfluß, geeignet.

Diese Folien, Formkörpern oder Fasern können nach den bekannten Verfahren der Thermoplastverarbeitung aus den erfindungsgemäßen Formmassen hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen, erfolgen.

Die erfindungsgemäßen Formmassen weisen gegenüber den bekannten stabilisierten Formmassen eine nochmals verbesserte Witterungsbeständigkeit, d.h. eine nochmals verbesserte Wärme-, Licht- und/oder Sauerstoffbeständigkeit, auf.

Die Erfindung wird anhand der nachfolgenden Beispiele näher erläutert.

### Beispiele:

### Meßmethoden:

Als ein Maß für die Witterungsbeständigkeit wurde an Prüfkörpern (60 x 60 x 2mm, hergestellt nach ISO 294 in einem Familienwerkzeug, bei einer Massetemperatur von 260°C und einer Werkzeugtemperatur von 60°C) eine Bewitterung gemäß Xenontest nach ISO 4892/2, Verfahren A, außen, durchgeführt. Nach den in Tabelle 1 genannten Bewitterungszeiten erfolgten die Messung des Oberflächenglanzes aller Proben nach DIN 67530 bei 60° Betrachtungswinkel.

Als weiteres Maß für die Witterungsbeständigkeit wurde die Änderung im Farbraum ΔE nach DIN 52 336 aus ΔL, ΔA und ΔB nach DIN 6174 berechnet.

### Einsatzstoffe

Komponenten oder Produkte mit vorangestelltem "V-" sind nicht erfindungsgemäß und dienen zum Vergleich.

Als Komponenten A und B (bzw. V-A zum Vergleich) wurden eingesetzt:
- AB-i:: ein butadienkautschukmodifiziertes Styrol-Acrylnitril-Copolymer (ABS) mit Quellungsindex 9 in Toluol für A6 beim Nachstellen des Beispiels 11 aus der DE 197 28 629 A1. Anstelle von Komponente B1 wurde ein Styrol-Acrylnitril Copolymer mit einer Viskositätszahl von 81 mit einem Molekulargewicht von 141.000, gemessen mit Hilfe von SEC-MALLS, (Chi-san Wu, Handbook of size exclusion chromatography and related techniques, Page 19) verwendet.
- V-AB-ii:: ein butadienkautschukmodifiziertes Styrol-Acrylnitril-Copolymer (ABS) mit einem Quellungsindex von 23.1 in Toluol in Abwandlung des Beispieles 11 aus der DE 197 28 629 A1 präpariert mit 40% mehr tert.-Dodecylmercaptan in K4. Anstelle von Komponente B1 wurde ein Styrol-Acrylnitril Copolymer mit einer Viskositätszahl von 81 mit einem Molekulargewicht von 141.000, gemessen mit Hilfe von SEC-MALLS, (Chi-san Wu, Handbook of size exclusion chromatography and related techniques, Page 19) verwendet.
- V-AB-iii:: ein von der BASF SE unter der Bezeichnung Polystyrol® 158K kommerziell vertriebenes Polystyrol.

Als Komponente C (bzw. V-C zum Vergleich) wurde eingesetzt:
- C-i:: eine Verbindung der Formel (I), kommerziell vertrieben von BASF SE unter der Bezeichnung Tinuvin^{Ⓡ} 770.
- V-C-ii:: eine Verbindung der Formel (VII), kommerziell vertrieben von BASF SE unter der Bezeichnung Tinuvin^{®} 765.

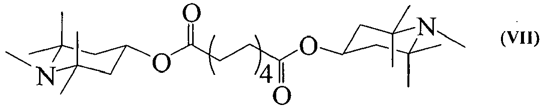

Als Komponente D wurde eingesetzt:
- D-i:: eine Verbindung der Formel (II), kommerziell vertrieben von Cytec Industries unter der Bezeichnung Cyasorb^{®} 3853.

Als Komponente E (bzw. V-E zum Vergleich) wurde eingesetzt:
- E-i:: eine Verbindung der Formel (III), kommerziell vertrieben von BASF SE unter der Bezeichnung Chimassorb^{®} 944.
- E-ii:: eine Verbindung der Formel (IV), kommerziell vertrieben von Adeka unter der Bezeichnung Adeka Stab^{®} LA-68.
- E-iii:: eine Verbindung der Formel (V), kommerziell vertrieben von Cytec industries unter der Bezeichnung Cyasorb^{®} UV-3346.
- V-E-iiii:: ein hochmolekulares sterisch gehindertes Amin, CAS-Nummer 106990-43-6, kommerziell vertrieben von SABO S.p.A. unter der Bezeichnung Sabostab^{®} 119.

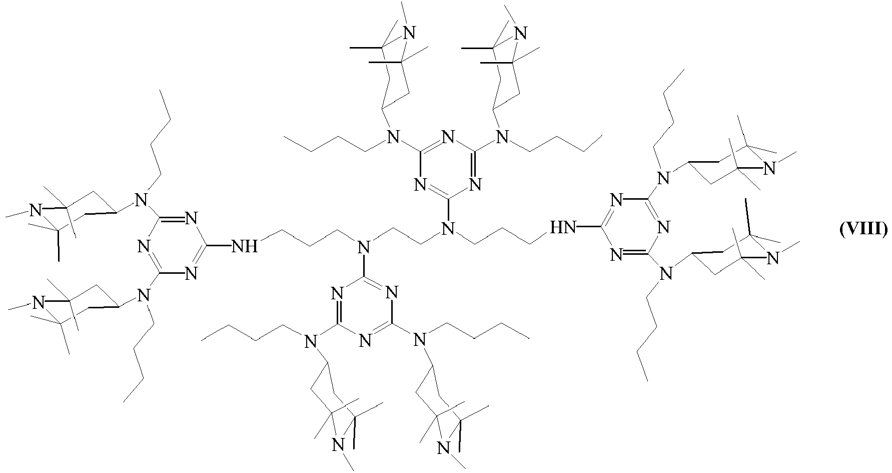

Als Komponente F (bzw. V-F zum Vergleich) wurde eingesetzt:
F-i: Ruß Typ Black Pearls 880, kommerziell vertrieben von Cabot Corporation

Herstellung der Formmassen und Formkörper:
Die Komponenten A, B, C und D (jeweilige Gewichtsteile siehe Tabelle 1) wurden in einem Zweischneckenextruder ZSK30 von Fa. Werner & Pfleiderer bei 250°C homogenisiert und in ein Wasserbad extrudiert. Die Extrudate wurden granuliert und getrocknet. Aus den Granulaten stellte man auf einer Spritzgussmaschine bei 260°C Schmelzetemperatur und 60°C Werkzeugoberflächentemperatur Prüfkörper her und bestimmte die in Tabelle 1 genannten Eigenschaften.

**Tabelle 1: Zusammensetzung und Eigenschaften der Formmassen (vorangestelltes V: zum Vergleich)**

| Beispiel | 1 | 2 | 3 | 4 | V-5 | V-6 | V-7 | V-8 | V-9 |
|---|---|---|---|---|---|---|---|---|---|
| Zusammensetzung | | | | | | | | | |
| AB-i | 97 | 97 | 97 | 97 | - | - | - | 97 | 97 |
| V-AB-ii | - | - | - | - | 97 | 99,75 | - | - | - |
| V-AB-iii | | | - | - | - | - | 99.8 | - | - |
| C-i | 0,5 | 0,5 | 0,5 | 0,5 | 0,5 | 0,05 | 0.1 | | 0,5 |
| V-C-ii | - | - | - | - | - | - | - | 0.5 | - |
| D-i | 0,5 | 0,25 | 0,25 | 0,25 | 0,25 | 0,05 | - | 0,25 | 0,25 - |
| E-i | - | 0,25 | 0,25 - | - | 0.25 | 0.1 | 0.1 | 0.25 | 0.25 - |
| E-i | - | - | 0,25 | 0,25 - | - | - | - | - | - |
| E-iii | - | - | - | 0,25 | 0,25 - | - | - | - | - |
| V-E-iV | - | - | - | - | - | - | - | - | 0,5 |
| F-i | 2 | 2 | 2 | 2 | 2 | 2 | 2 | 2 | 2 |
| Eigenschaften | | | | | | | | | |
| Glanz nach | | | | | | | | | |
| | | | | | | | | | |
| 0 h BWZ | 97 | 96 | 98 | 96 | 83 | 89 | 102 | 98 | 96 |
| 500 h BWZ | 83 | 88 | 87 | 87 | 71 | 65 | 101 | 78 | 74 |
| 1000 h BWZ | 27 | 32 | 35 | 33 | 11 | 5 | 7 | 3 | 2 |
| ΔE nach | | | | | | | | | |
| | | | | | | | | | |
| 0 h BWZ | 0 | 0 | 0 | 0 | 0 | 0 | 0 | 0 | 0 |
| 500 h BWZ | 0,3 | 0,2 | 0,3 | 0,3 | 1,1 | 1,4 | 1,2 | 1,4 | 1,8 |
| 1000 h BWZ | 0,8 | 0,6 | 0,7 | 0,6 | 1,7 | 2,3 | 3,8 | 3,8 | 4,2 |

Die Beispiele belegen, daß die erfindungsgemäßen Formmassen gegenüber den bekannten stabilisierten Formmassen eine nochmals verbesserte Witterungsbeständigkeit, d.h. eine nochmals verbesserte Wärme-, Licht-, und/oder Sauerstoffbeständigkeit, aufweisen. Die Zusammensetzung ist in Gewichtsanteilen gegeben und die Abkürzung BWZ steht für Bewitterungszeit.

## Patentansprüche

1. Thermoplastische Formmasse, enthaltend:
a) 3 bis 94,6 Gew.-% eines oder mehrerer Styrolcopolymere als Komponente A, wobei man als Komponente A ein Copolymer aus Acrylnitril, Styrol und/oder α-Methylstyrol, Phenylmaleinimid, Methacrylsäuremethylester oder deren Mischungen einsetzt,
b) 5 bis 95,2 Gew.-% eines oder mehrerer schlagzäh-modifizierender Propfkautschuke mit olefinischer Doppelbindung in der Kautschukphase als Komponente B, wobei der Quellungsindex der Komponente B 5 bis 20 beträgt,
c) 0,2 bis 0,9 Gew.-% einer Verbindung der Formel (I) als Komponente C: 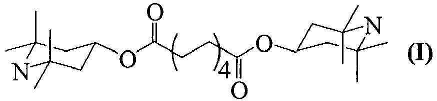
d) 0,2 bis 0,7 Gew.-% eines Gemisches der Formel (II) als Komponente D: 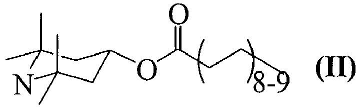
e) 0 bis 0,5 Gew.-% einer Verbindung der Formel (III) als Komponente E: 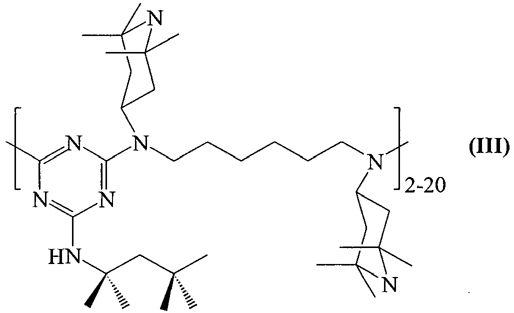 oder 0 bis 0,5 Gew.-% einer Verbindung der Formel (IV): 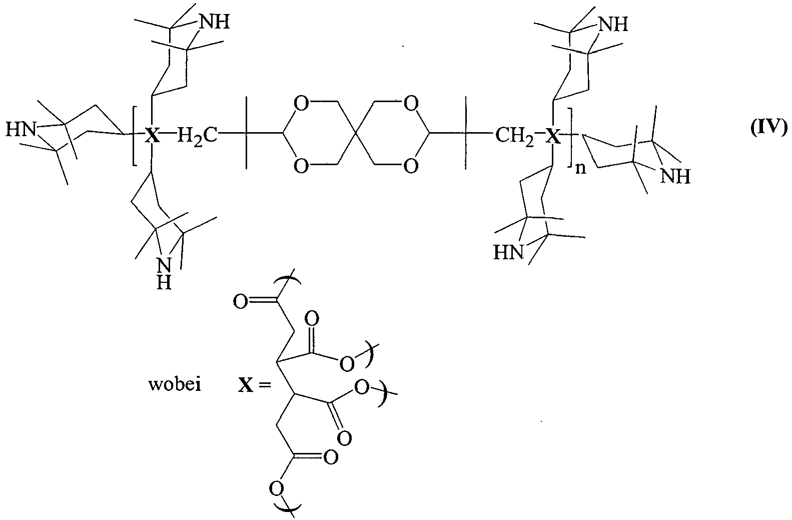 oder 0 bis 0,5 Gew.-% einer Verbindung der Formel (V): 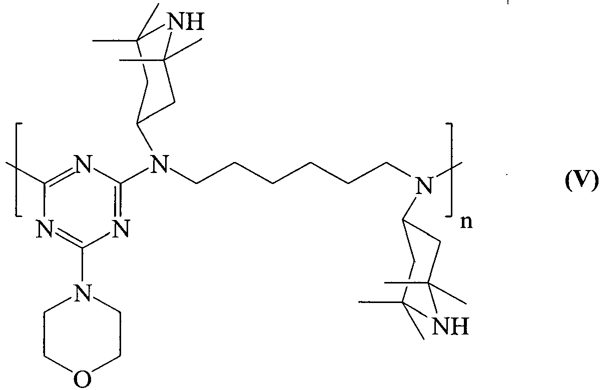 oder 0 bis 0,5 Gew.-% einer Verbindung der Formel (VI): 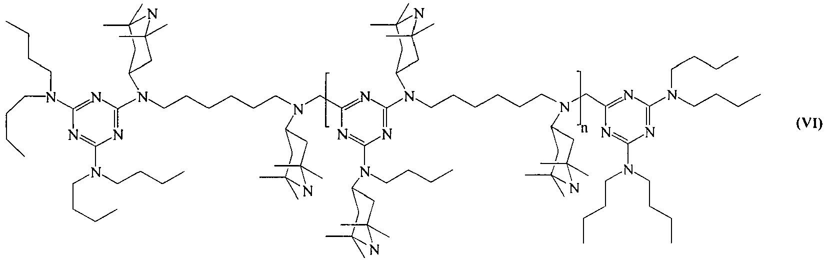
f) 0 bis 10 Gew.-% eines oder mehrerer Zusatzstoffe, die von den Komponenten C,D und E verschieden sind, als Komponente F, und
g) 0 bis 40 Gew.-% faser- oder teilchenförmiger Füllstoffe als Komponente G, wobei die Gew.-% jeweils auf das Gesamtgewicht der Komponenten A bis G bezogen sind und zusammen 100 Gew.-% ergeben.

2. Thermoplastische Formmassen nach Anspruch 1, **dadurch gekennzeichnet, dass** man als Komponente B ein Gemisch aus einem Acrylnitril-Butadiene-Styrol (ABS)-Pfropfpolymer einsetzt, das
50 bis 80 Gew.-%, bezogen auf B, eines elastomer vernetzten Butadien-Polymerisat B1 und
50 bis 20 Gew.-%, bezogen auf B, einer Propfhülle B2 aus einem vinylaromatischen Monomeren und einem oder mehreren polaren, copolymerisierbaren, ethylenisch ungesättigten Monomeren, gegebenenfalls einem weiteren copolymerisierbaren, ethylenisch ungesättigten Monomer im Gewichtsverhältnis 85:15 bis 75:25 enthält.

3. Thermoplastische Formmassen nach Anspruch 1 oder 2, **dadurch gekennzeichnet, dass** der mittlere Teilchendurchmesser von Komponente B zwischen 50 bis 800 nm liegt.

4. Thermoplastische Formmassen nach einem der Ansprüche 1 bis 3, **dadurch gekennzeichnet, dass** man die Komponenten C zu D im Gewichtsverhältnis von 3:1 bis 1:1 und Komponenten D zu E im Gewichtsverhältnis von 2:1 bis 0,5:1 einsetzt.

5. Thermoplastische Formmassen nach einem der Ansprüche 1 bis 4, **dadurch gekennzeichnet, dass** man als vinylaromatische Komponente in B2 Styrol oder α-Methylstyrol einsetzt.

6. Thermoplastische Formmassen nach einem der Ansprüche 1 bis 5, **dadurch gekennzeichnet, dass** man als ethylenisch ungesättige Komponente in B2 Acrylnitril und/oder Alkylmethacrylate und/oder Alkylacrylate mit C₁- bis C₈-Alkylresten einsetzt.

7. Thermoplastische Formmassen nach einem der Ansprüche 1 bis 6, **dadurch gekennzeichnet, dass** man die Komponente B bimodal einsetzt.

8. Verfahren zur Herstellung von thermoplastischen Formmassen nach einem der Ansprüche 1 bis 7, **dadurch gekennzeichnet, dass** man die Komponenten A bis F bei Temperaturen von 100 bis 300°C und einem Druck von 1 bis 50 bar in beliebiger Reihenfolge miteinander vermischt, anschließend knetet und extrudiert.

9. Verwendung von thermoplastischen Formmassen nach einem der Ansprüche 1 bis 7 zur Herstellung von Formkörpern, Folien oder Fasern.

10. Verwendung der thermoplastischen Formmassen nach Anspruch 9 zur Herstellung von Formkörpern für KFZ-Bauteile oder Teile von Elektronikgeräten.

11. Formkörper, Fasern oder Folien aus einer thermoplastischen Formmasse nach einem der Ansprüche 1 bis 7.

## Claims

1. A thermoplastic molding composition comprising:
a) from 3 to 94.6% by weight of one or more styrene copolymers as component A, wherein a copolymer made of acrylonitrile, styrene, and/or α-methylstyrene, phenylmaleimide, methyl methacrylate, or mixtures of these, is used as component A,
b) from 5 to 95.2% by weight of one or more impact-modifying graft rubbers having an olefinic double bond in the rubber phase as component B, wherein the swelling index of component B is from 5 to 20,
c) from 0.2 to 0.9% by weight of a compound of the formula (I) as component C: 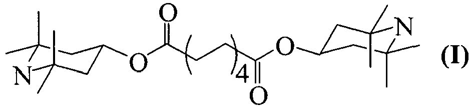
d) from 0.2 to 0.7% by weight of a mixture of the formula (II) as component D: 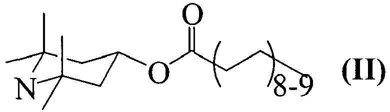
e) from 0 to 0.5% by weight of a compound of the formula (III) as component E: 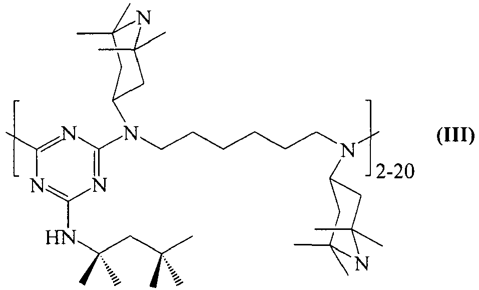 or from 0 to 0.5% by weight of a compound of the formula (IV): 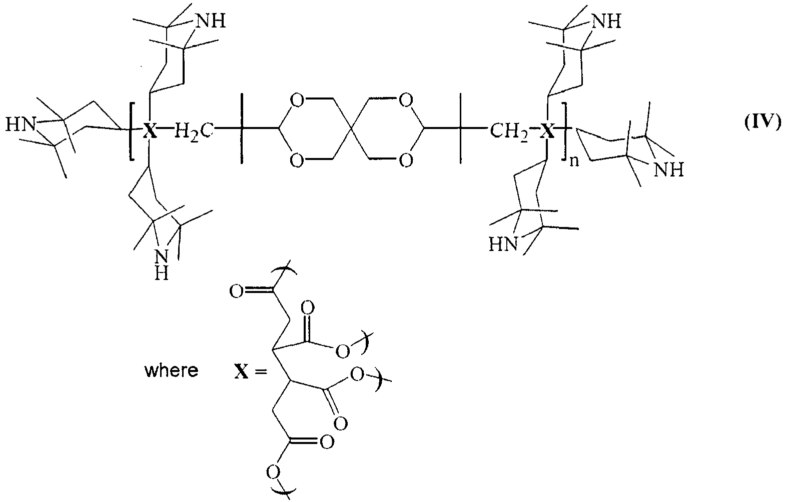 or from 0 to 0.5% by weight of a compound of the formula (V): 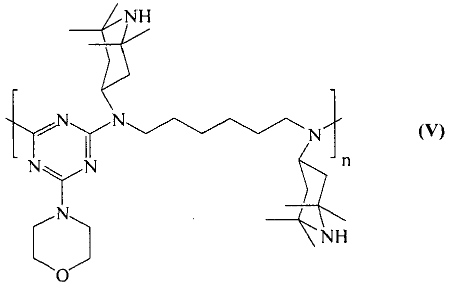 or from 0 to 0.5% by weight of a compound of the formula (VI): 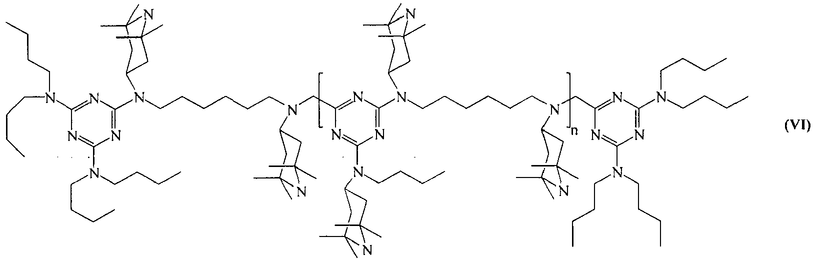
f) from 0 to 10% by weight of one or more additives, where these differ from components C, D, and E, as component F, and
g) from 0 to 40% by weight of fibrous or particulate fillers as component G,
where each of the % by weight values is based on the sum weight of components A to G, and the sum of these values is 100% by weight.

2. The thermoplastic molding composition according to claim 1, wherein a mixture of an acrylonitrile-butadiene-styrene (ABS) graft polymer which comprises
from 50 to 80% by weight, based on B, of an elastomerically crosslinked butadiene polymer B1 and
from 50 to 20% by weight, based on B, of a graft shell B2 made of a vinylaromatic monomer and one or more polar, copolymerizable, ethylenically unsaturated monomers, and optionally a further copolymerizable, ethylenically unsaturated monomer, in a ratio by weight of from 85:15 to 75:25,
is used as component B.

3. The thermoplastic molding composition according to claim 1 or 2, wherein the average particle diameter of component B is from 50 to 800 nm.

4. The thermoplastic molding composition according to any of claims 1 to 3, wherein the components C and D are used in a ratio by weight of from 3:1 to 1:1 and the components D and E are used in a ratio by weight of from 2:1 to 0.5:1.

5. The thermoplastic molding composition according to any of claims 1 to 4, wherein styrene or α-methylstyrene is used as vinylaromatic component in B2.

6. The thermoplastic molding composition according to any of claims 1 to 5, wherein acrylonitrile and/or alkyl methacrylates and/or alkyl acrylates having C₁-C₈-alkyl radicals are uses as ethylenically unsaturated component in B2.

7. The thermoplastic molding composition according to any of claims 1 to 6, wherein the component B is used in bimodal form.

8. A process for producing thermoplastic molding compositions according to any of claims 1 to 7, wherein components A to F are mixed with one another at temperatures of from 100 to 300°C and at a pressure of from 1 to 50 bar in any desired sequence, and then kneaded and extruded.

9. Use of thermoplastic molding compositions according to any of claims 1 to 7 for producing moldings, foils, or fibers.

10. The use of the thermoplastic molding compositions according to claim 9 for producing moldings for motor-vehicle components or for parts of electronic equipment.

11. A molding, fiber, or foil made of a thermoplastic molding composition according to any of claims 1 to 7.

## Revendications

1. Mélange à mouler thermoplastique, contenant :
a) 3 à 94,6 % en poids d'un ou plusieurs copolymères de styrène en tant que composant A, auquel cas on utilise en tant que composant A un copolymère d'acrylonitrile, de styrène et/ou d'α-méthylstyrène, de phénylmaléimide, de l'ester méthylique de l'acide méthacrylique ou des mélanges de ceux-ci,
b) 5 à 95,2 % en poids d'un ou plusieurs caoutchoucs greffés modifiant la résistance au choc, ayant une double liaison oléfinique dans la phase caoutchouc, en tant que composant B, l'indice de gonflement du composant B étant de 5 à 20,
c) 0,2 à 0,9 % en poids d'un composé de formule (I), en tant que composant C : 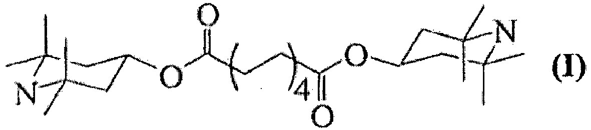
d) 0,2 à 0,7 % en poids d'un mélange de formule (II), en tant que composant D : 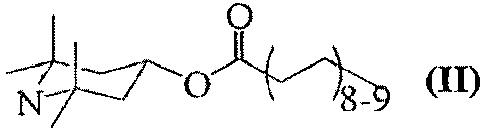
e) 0 à 0,5 % en poids d'un composé de formule (III), en tant que composant E : 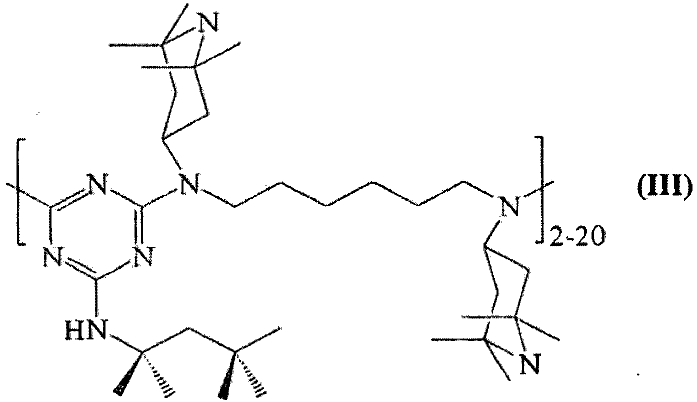 ou 0 à 0,5 % en poids d'un composé de formule (IV) : 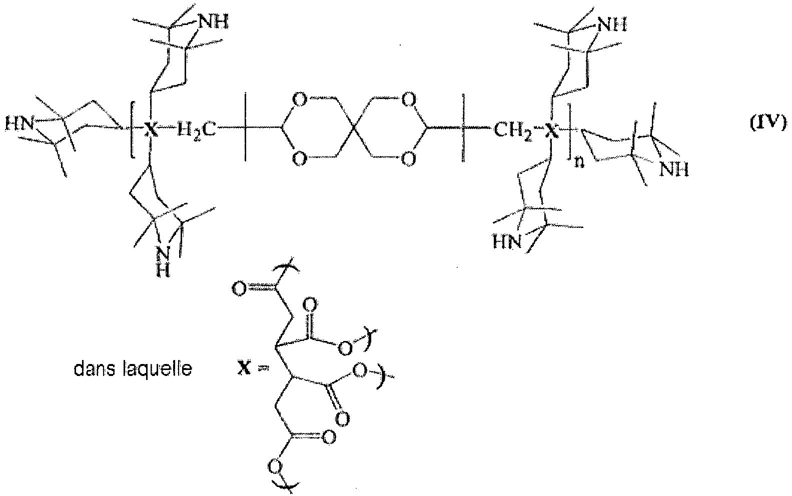 ou 0 à 0,5 % en poids d'un composé de formule (V) : 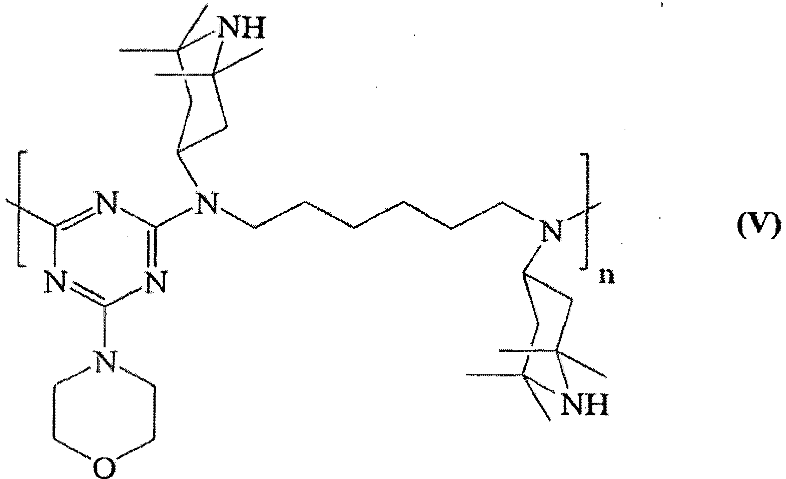 ou 0 à 0,5 % en poids d'un composé de formule (VI) : 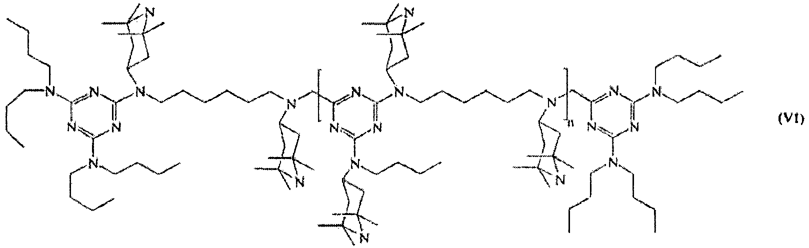
f) 0 à 10 % en poids d'un ou plusieurs additifs, qui sont différents des composants C, D et E, en tant que composant F, et
g) 0 à 40 % en poids de matières de charge fibreuses ou particulaires, en tant que composant G,
chacun des pourcentages en poids étant rapporté au poids total des composants A à G, et représentant en tout 100 % en poids.

2. Mélanges à mouler thermoplastiques selon la revendication 1, **caractérisés en ce qu'**on utilise en tant que composant B un mélange constitué d'un polymère greffé d'acrylonitrile-butadiène-styrène (ABS), qui contient 50 à 80 % en poids, par rapport à B, d'un polymère de butadiène B1 réticulé élastomère, et
50 à 20 % en poids, par rapport à B, d'un greffon B2 constitué d'un monomère vinylaromatique et d'un ou plusieurs monomères polaires, copolymérisables, à insaturation éthylénique, éventuellement d'un monomère supplémentaire copolymérisable à insaturation éthylénique, selon un rapport en poids de 85:15 à 75:25.

3. Mélanges à mouler thermoplastiques selon la revendication 1 ou 2, **caractérisés en ce que** la granulométrie moyenne du composant B est comprise entre 50 et 800 nm.

4. Mélanges à mouler thermoplastiques selon l'une des revendications 1 à 3, **caractérisés en ce qu'**on utilise les composants C et D selon un rapport en poids de 3:1 à 1:1 et les composants D et E selon un rapport en poids de 2:1 à 0,5:1.

5. Mélanges à mouler thermoplastiques selon l'une des revendications 1 à 4, **caractérisés en ce qu'**on utilise en tant que composant vinylaromatique dans B2 du styrène ou de l'α-méthylstyrène.

6. Mélanges à mouler thermoplastiques selon l'une des revendications 1 à 5, **caractérisés en ce qu'**on utilise en tant que composant à insaturation éthylénique dans B2 de l'acrylonitrile et/ou des méthacrylates d'alkyle et/ou des acrylates d'alkyle ayant des résidus alkyle en C₁ à C₈.

7. Mélanges à mouler thermoplastiques selon l'une des revendications 1 à 6, **caractérisés en ce qu'**on utilise le composant B à structure bimodale.

8. Procédé de fabrication des mélanges à mouler thermoplastiques selon l'une des revendications 1 à 7, **caractérisé en ce qu'**on mélange les uns aux autres dans un ordre quelconque les composants A à F à des températures de 100 à 300°C et sous une pression de 1 à 50 bar, puis on les malaxe et on les extrude.

9. Utilisation de mélanges à mouler thermoplastiques selon l'une des revendications 1 à 7 pour fabriquer des objets moulés, des feuilles ou des fibres.

10. Utilisation des mélanges à mouler thermoplastiques selon la revendication 9 pour fabriquer des objets moulés pour des composants pour automobile ou des pièces pour appareils électroniques.

11. Objets moulés, fibres ou feuilles, obtenus à partir d'un mélange à mouler thermoplastique selon l'une des revendications 1 à 7.
